# EUROPÄISCHE PATENTANMELDUNG

(11) **EP 0 672 553 A1**
(43) Veröffentlichungstag der Anmeldung: **20.09.1995**
(21) Anmeldenummer: 94900329.7
(22) Anmeldetag: 05.11.1993
(51) Int. Cl.: B60K 17/32

(54) **VORRICHTUNG ZUR BEFESTIGUNG EINES REDUKTIONSGETRIEBES EINES RADANTRIEBS**

(30) Priorität: 09.12.1992 RU 9201048
(71) Anmelder: AKTSIONERNOE OBSCHESTVO ZAKRYTOGO TIPA" AVTOVAZ-SHER", Moscow, 103340 (RU); PEUGEOT CITROEN MOTEURS, F-92000 Nanterre Cedéex (FR); AKTSIONERNOE OBSCHESTVO OTKRYTOGO TIPA " AVTOVAZ", Tolyatti, 445633 (RU)
(72) Erfinder: AKIMOV, Jury Alexandrovich, Tolyatti-9, 445039 (RU); DOMANSKY, Valery Ivanovich, Tolyatti-24, 445024 (RU); JUMEL, Bernard 49, rue Noel-Pons, F-92000 Nanterre Cédex (FR); ROMANOV, Alexandr Alexandrovich, Moskovskaya obl. Chekhov, 142300 (RU); SAVINOVSKY, Nikolay Ivanovich, Tolyatti-42, 445042 (RU); SESTER, Patrick 49, rue Noel-Pons, F-92000 Nanterre Cédex (FR); STANISHEVSKY, Alexandr Veniaminovich, Moscow, 129041 (RU); TROFIMOV, Vladimir Anatolievich, Moscow, 121360 (RU)
(74) Vertreter: Springstubbe, Wolf, Dipl.-Ing.
(86) Internationale Anmeldenummer: RU9300260
(87) Internationale Veröffentlichungsnummer: WO9413505

(57) **Zusammenfassung**

Benutzung: Auf dem Gebiet des Automobilbaus.
Wesen der Erfindung: Die Vorrichtung weist an den Seitendeckeln des Untersetzungsgetriebes befestigte Tragarme auf. Die Befestigung der Tragarme wird realisiert durch Schraubverbindungen der Deckel des Untersetzungsgetriebes mit dessen Gehäuse. Die einen Enden der Tragarme sind über elastische Verbindungen mit dem Stützträger der unabhängigen Aufhängung der Rädersteuerung verbunden. Die anderen Enden der Tragarme sind über mindestens eine elastische Abstützung mit dem Querstabilisator des Kraftwagens verbunden. Die Tragarme können entlang der Kraftwagen-Längsachse angeordnet sein. In diesem Fall sind sie mit dem Stabilisator mit Hilfe zweier elastischer Abstützungen verbunden. Die Tragarme können in der Draufsicht eine Gabelform bildend gebogen sein. In diesem Fall sind ihre entsprechende Enden über eine elastische Abstützung mit dem Stabilisator verbunden. Die elastische Abstützung ist durch eine Halterung und ein Kissen gebildet. Die elastische Verbindung zwischen den Tragarmen und dem Stützträger hat die Form eines Silentblocks.

## Beschreibung

### Gebiet der Technik

Die vorliegende Erfindung betrifft das Gebiet des Automobilbaus, und zwar Vorrichtungen zur Befestigung des Radantrieb-Untersetzungsgetriebes eines Kraftwagens, vorzugsweise eines Personenkraftwagens.
Am zweckmäßigsten ist die Vorrichtung in der Automobilbauindustrie zur Befestigung von Untersetzungsgetrieben des Antriebs der Räder von Allradantrieb- und Vorderradantrieb-Kraftwagen zu benutzen.

### Stand der Technik

Derzeit gibt es das Problem der Befestigung des Untersetzungsgetriebes der Antriebsachse, das sich in einer Baugruppe mit dem Triebwerk eines Personenkraftwagens befindet.
In in Betracht kommenden Konstruktionen wird als eine der Abstutzungen des Untersetzungsgetriebes der Antriebsachse des Kraftwagens das Triebwerk benutzt.
Die vorgeschlagene Konstruktion hat im Vergleich mit der traditionellen Befestigung wesentliche Vorteile, die durch das Fehlen einer festen konstruktiven Verbindung mit dem Triebwerk bedingt sind. Dies gibt die Möglichkeit, die Konstruktion zu vereinfachen, die Betriebssicherheit zu erhöhen, den Metallbedarf und den Lärmpegel zu verringern.
Eines der Hauptprobleme der Verbesserung der Vorrichtungen ist die Beseitigung von gegenseitigen negativen Einwirkungen des Radantrieb-Untersetzungsgetriebes und des Triebwerkes.

Es ist eine Vorrichtung zur Befestigung des Radantrieb-Untersetzungsgetriebes des Kraftwagens VAZ 2121 "Niva" bekannt, in der das Vorderachs-Untersetzungsgetriebe über Tragarme am Gehäuse und am Motorblock an drei Punkten starr befestigt ist [Buch von W. A. Werschigora und andere "Kraftwagen VAZ 2121", Mehrfarbalbum, Moskau, Maschinistrojenije, 1982, Seite 4 (Bogen 1), Seite 48 (Bogen 23)].
Ein Nachteil dieser Vorrichtung ist die Vergrößerung der Masse des Triebwerkes sowie die Übertragung eines zusätzlichen Vibrations- und Lärmflusses, der vom Triebwerk und von den Elementen der Transmission auf die Karosserie des Kraftwagens übergeht, was zu erhöhtem Verschleiß der Aufhängungselemente des Triebwerkes an der Karosserie führt und den Komfort des Fahrzeuges senkt.

Es ist auch eine Vorrichtung zur Befestigung des Radantrieb-Untersetzungsgetriebes des Kraftwagens VITARA der Firma SUZUKI bekannt, in der das Untersetzungsgetriebe isoliert vom Motor mittels dreier Schwingmetall-Abstützungen an speziellen Rahmenquerträgern angeordnet ist. Eine solche Konstruktion erlaubt es, Nachteile zu vermeiden, die der vorherigen technischen Lösung eigen sind, und zwar trennt sie den Vibrations- und Lärmfluß, die von dem Triebwerk ausgeht, von der Karosserie und senkt die Belastung der Aufhängungselemente des Motors [Werbekatalog der Firma SUZUKI MOTOR CO.LTD, Japan, 1988, Seite 17].
Ein Nachteil dieser Vorrichtung ist die größere Kompliziertheit der Konstruktion und die Vergrößerung des Metallbedarfs wegen des Vorhandenseins von speziellen Querträgern zur Befestigung der elastischen Schwingmetall-Abstützungen der Aufhängung des Vorderachs-Untersetzungsgetriebes an ihnen.

Es ist außerdem eine Vorrichtung zur Befestigung des Radantrieb-Untersetzungsgetriebes eines Kraftwagens bekannt, die einen Stützträger, der über Aufhängungshebel mit den Rädern verbunden ist und der mittels Tragarmen und elastischer Elemente mit dem Radantrieb-Untersetzungsgetriebe verbunden ist, und den Querstabilisator des Kraftwagens aufweist [DE-Patent Nr. 2 704 790, Kl. B 60 K 17/32, 1983].

Nachteil dieser Vorrichtung ist die Kompliziertheit der Konstruktion, ein beträchtlicher Metallbedarf und eine nicht ausreichende Sicherheit.

### Kurze Darlegung des Wesens der Erfindung

Der Erfindung liegt die Aufgabe zugrunde, eine solche Vorrichtung zur Befestigung eines Radantrieb-Untersetzungsgetriebes zu schaffen, die es erlaubt, die Konstruktion und die Montagetechnologie zu vereinfachen, die Sicherheit zu erhöhen und den Metallbedarf zu verringern.
Das Wesen der Erfindung besteht darin, daß in einer Vorrichtung zur Befestigung des Untersetzungsgetriebes des Radantriebs eines Kraftwagens, die einen Stützträger, der über Aufhängungshebel mit den Rädern verbunden ist und der mit Hilfe von Tragarmen und elastischen Elementen mit dem Untersetzungsgetriebe des Radantriebs verbunden ist, und den Querstabilisator des Kraftwagens aufweist, die Tragarme mit ihren mittleren Teilen an dem Untersetzungsgetriebe, mit ihren einen Enden am Stützträger und mit den anderen Enden am Querstabilisator des Kraftwagens mittels mindestens einer elastischen Abstützung befestigt sind.

In dieser Vorrichtung ist das Untersetzungsgetriebe mit Seitendeckeln versehen, die mit ihm mit Schraubelementen verbunden sind, mittels derer die Tragarme mit ihren mittleren Teilen am Untersetzungsgetriebe befestigt sind.

In einer der abhängigen Hauptausfuhrungsformen sind die elastischen Abstützungen der Tragarme über die Länge des Stabilisators beabstandet.

In einer anderen abhängigen Ausführungsform sind die Tragarme in der Draufsicht mit zum Stabilisator hin zusammenlaufenden Enden gebogen eine Gabelform bildend ausgebildet und mit dem Stabilisator durch eine elastische Abstützung verbunden.

In einer bevorzugten Ausführung ist die elastische Abstützung durch eine den Stabilisator umfassende lösbare Halterung mit einem Kissen gebildet, wobei die entsprechenden Enden der Tragarme an der Halterung starr befestigt sind.

Die elastischen Elemente, die die Tragarme mit dem Stützträger verbinden, können konstruktiv als Silentblocks ausgebildet sein.

Zur Vermeidung der Beeinflussung des Querstabilisators ist der Abstand zwischen dem Befestigungspunkt der Tragarme am Untersetzungsgetriebe und dem Stützträger kleiner als der Abstand zwischen dem genannten Befestigungspunkt der Tragarme und dem Stabilisator.

Die Gesamtheit wesentlicher Merkmale der angemeldeten Lösung ist neu und für den Fachmann durch den Stand der Technik nicht nahegelegt.

### Gewerbliche Verwertbarkeit

Die vorliegende Erfindung erlaubt es, die Lebensdauer des Fahrzeuges zu erhöhen.
Sie kann breiteste Verwendung im Automobilbau finden.
Die vorgeschlagene technische Lösung ist gewerblich verwertbar, weil sie in einem industriellen Verfahren benutzt werden kann, funktionsfähig, durchführbar und wiederholbar ist.

### Kurze Beschreibung der Zeichnungen

Im folgenden wird die Erfindung anhand einer ausführlichen Beschreibung eines konkreten Ausführungsbeispiels und von Zeichnungen erläutert, in denen die vorgeschlagene Vorrichtung dargestellt ist.

### Ausführliche Beschreibung einer konkreten Ausführungsform der Erfindung

Es seien nun die Zeichnungen betrachtet, in denen eine bevorzugte Ausführungsform der Befestigung des Radantriebs-Untersetzungsgetriebes eines Kraftwagens dargestellt ist.
In Fig. 1 ist der Vorderteil eines Allradantriebfahrzeuges, beispielsweise eines Personenkraftwagens gezeigt;
in Fig. 2 die Seitenansicht des Untersetzungsgetriebes der Antriebsachse;
in Fig. 3 die Aufsicht auf ein Untersetzungsgetriebe, das mit Hilfe von zwei Längstragarmen befestigt ist;
in Fig. 4 die Aufsicht auf ein Untersetzungsgetriebe, das mittels gebogener Tragarme befestigt ist.

Die Vorrichtung zur Befestigung des Radantrieb-Untersetzungsgetriebes 1 enthält zwei Tragarme 2, die mit ihren mittleren Abschnitten durch Schraubverbindungen, zum Beispiel durch Stiftschrauben 3, an den Außenflächen der Seitendeckel 4 des Untersetzungsgetriebes 1 befestigt sind. Die einen Enden der Tragarme 2 sind an einem Stutzträger 5 der Aufhängung der Antriebsräder mittels elastischer Verbindungen - Silentblocks 6 - befestigt. Die anderen Enden der Tragarme 2 sind mit dem Querstabilisator 7 des Kraftwagens mittels mindestens einer elastischen Abstützung 8 verbunden. Bei der Anordnung der Tragarme 2 entlang der Längsachse des Fahrzeuges sind ihre anderen Enden mit dem Stabilisator 7 mittels zweier elastischer Abstützungen 8 verbunden, die über die Länge des Stabilisators beabstandet sind. Die Tragarme 2 können in der Draufsicht eine Gabelform mit zum Stabilisator 7 hin zusammenlaufenden Enden bildend gebogen sein. In diesem Fall werden die anderen Enden der Tragarme 2 am Stabilisator durch eine elastische Abstutzung 8 befestigt. Jede elastische Abstützung 8 ist durch eine losbare Halterung 9 und ein Kissen 10 gebildet, wobei die entsprechenden Enden der Tragarme an der Halterung 9 befestigt sind. Der Abstand zwischen dem Befestigungspunkt der Tragarme 2 am Untersetzungsgetriebe 1 und dem Stutzträger 5 ist kleiner als der Abstand zwischen dem genannten Befestigungspunkt der Tragarme und dem Stabilisator 7. Die Anordnung des Untersetzungsgetriebes 1 in Bezug auf das Triebwerk und die Transmission ist in Fig. 1 dargestellt, in der das Triebwerk 11 auf den Fahrgestell-Längsträgern 12 des Rahmens 13 angeordnet ist und die Transmission außer mit dem Untersetzungsgetriebe 1 mit dem Getriebe 14, den Kardanwellen 15 und dem Verteilergetriebe 16 dargestellt ist. Der Stabilisator 7 ist an der Karosserie 17 des Kraftwagens mittels Abstutzungen 18 angeordnet.

### Die Vorrichtung arbeitet wie folgt:

Bei Dreh- und geradlinigen Schwingungen des Untersetzungsgetriebes 1 in der vertikalen Langsebene wird die Belastung über die Tragarme 2 auf den Stützträger 5 über die an ihm befestigten Silentblocks 6 übertragen und über die Abstützungen 8 auf den Querstabilisator 7. Zur Vermeidung einer Einwirkung der Abstützungen 8 auf die Verteilung eines Drehmomentes über die Länge des Stabilisators 7 ist die Konstruktion der Abstützung 8 so ausgebildet, daß die Stabilisatorstange in ihr verschiebbar ist. Da die Belastung des Stutzträgers 5 und des Stabilisators 7 durch die Tragarme wegen der Unerwünschtheit einer starken Belastung des Stabilisators unterschiedlich sein soll, ist der Abstand zwischen dem Befestigungspunkt der Tragarme am Untersetzungsgetriebe und dem Stutzträger kleiner als der Abstand zwischen dem genannten Befestigungspunkt der Tragarme und dem Stabilisator 7, d.h., auf den Stutzträger kommt der größere Belastungsanteil zu.

Der technische Effekt der Benutzung der angemeldeten Vorrichtung liegt in der Vereinfachung der Konstruktion, der Senkung des Metallbedarfs und der Erhöhung der Sicherheit.
Der angegebene technische Effekt wird dadurch erzielt, daß in der Vorrichtung zur Befestigung des Untersetzungsgetriebes des Radantriebes eines Kraftwagens, die einen Stutzträger, der über Aufhängungshebel mit den Rädern verbunden ist und der mit dem Radantrieb-Untersetzungsgetriebe mit Hilfe von Tragarmen und elastischen Elementen verbunden ist, und den Querstabilisator des Kraftwagens aufweist, die Tragarme mit ihren mittleren Teilen am Untersetzungsgetriebe, mit ihren einen Enden am Stützträger und mit den anderen Enden am Querstabilisator des Kraftwagens mittels mindestens einer elastischen Abstützung befestigt sind.

Die Vorrichtung ist erfolgreich in russischen Fahrzeugen des Typs NIVA VAZ-2121 bei Einbau eines Dieselmotors der französischen Firma Peugeot Citroen Moteurs XUD-9 erprobt.

## Patentansprüche

1. Vorrichtung zur Befestigung des Radantrieb-Untersetzungsgetriebes (1) eines Kraftwagens, enthaltend einen Stützträger (5), der über Aufhängungshebel mit den Rädern verbunden ist und der über Tragarme (2) und elastische Elemente (6) mit dem Radantriebs-Untersetzungsgetriebe (1) verbunden ist, und einen Querstabilisator (7) des Kraftwagens,
**dadurch gekennzeichnet,**
daß die Tragarme (2) mit ihren mittleren Teilen am Untersetzungsgetriebe (1), mit ihren einen Enden am Stützträger (5) und mit den anderen Enden am Querstabilisator (7) des Kraftwagens mittels mindestens einer elastischen Abstützung (8) befestigt sind.

2. Vorrichtung nach Anspruch 1,
**dadurch gekennzeichnet,**
daß das Untersetzungsgetriebe (1) mit Seitendeckeln (4) versehen ist, die mit ihm durch Schraubelemente (3) verbunden sind, mittels derer die Tragarme (2) mit ihren mittleren Teilen am Untersetzungsgetriebe (1) befestigt sind.

3. Vorrichtung nach Anspruch 1,
**dadurch gekennzeichnet,**
daß die genannten elastischen Abstützungen (8) der Tragarme (2) über die Länge des Stabilisators (7) beabstandet sind.

4. Vorrichtung nach Anspruch 1,
**dadurch gekennzeichnet,**
daß die Tragarme (2) in der Draufsicht mit zum Stabilisator (7) hin zusammenlaufenden Enden gebogen eine Gabelform bildend ausgebildet sind und mittels mindestens einer elastischen Abstützung (8) mit dem Stabilisator (7) verbunden sind.

5. Vorrichtung nach den Ansprüchen 3, 4,
**dadurch gekennzeichnet,**
daß die elastische Abstützung (8) durch eine den Stabilisator (7) umfassende lösbare Halterung (9) mit einem Kissen (10) gebildet ist, wobei die entsprechenden Enden der Tragarme (2) an der Halterung (9) starr befestigt sind.

6. Vorrichtung nach den Ansprüchen 3, 4,
**dadurch gekennzeichnet,**
daß die die Tragarme (2) mit dem Stutzträger (5) verbindenden elastischen Elemente als Silentblocks (6) ausgebildet sind.

7. Vorrichtung nach Anspruch 1,
**dadurch gekennzeichnet,**
daß der Abstand zwischen dem Befestigungspunkt der Tragarme (2) am Untersetzungsgetriebe (1) und dem Stützträger (5) kleiner ist als der Abstand zwischen dem genannten Befestigungspunkt der Tragarme (2) und dem Stabilisator (7).
